Europäisches Patentamt

**European Patent Office**

**Office européen des brevets**

(19)

(11) Veröffentlichungsnummer: **0 038 042**
**B1**

(12) **EUROPÄISCHE PATENTSCHRIFT**

(45) Veröffentlichungstag der Patentschrift:
**29.08.84**

(21) Anmeldenummer: **81102762.2**

(22) Anmeldetag: **10.04.81**

(51) Int. Cl.³: **B 01 D 25/12,** B 01 D 25/26,
B 01 D 37/02

(54) **Filtriereinrichtung.**

(30) Priorität: **16.04.80 AT 2057/80**

(43) Veröffentlichungstag der Anmeldung:
**21.10.81 Patentblatt 81/42**

(45) Bekanntmachung des Hinweises auf die Patenterteilung:
**29.08.84 Patentblatt 84/35**

(84) Benannte Vertragsstaaten:
**BE CH DE FR GB IT LI NL SE**

(56) Entgegenhaltungen:
**CH - A - 455 711**
**DE - A - 2 821 768**
**FR - A - 2 124 369**
**US - A - 1 720 211**

(73) Patentinhaber: **INTEREX GMBH, Borgweg 15a,
2000 Hamburg 60 (DE)**

(72) Erfinder: **Hiesinger, Edwin, Schalserstrasse 17,
A-6200 Jenbach (AT)**
Erfinder: **Keplinger, Klaus, Müllerstrasse 30,
A-6020 Innsbruck (AT)**
Erfinder: **Nessler, Hermann, Dipl.-Ing., Müllerstrasse 30,
A-6020 Innsbruck (AT)**

(74) Vertreter: **Torggler, Paul, Dr. et al, Patentanwälte Dr.
Paul Torggler DDr. Engelbert Hofinger
Wilhelm-Greil-Strasse 16, A-6020 Innsbruck (AT)**

BUNDESDRUCKEREI BERLIN

## Beschreibung

Die Erfindung betrifft eine Filtriereinrichtung zur Abtrennung von Teilchen aus einem strömenden Medium, mit mindestens einer im wesentlichen zylindrischen Filterkammer, die durch ein Stützgewebe für eine anschwemmbare Filterschicht in zwei Teilkammern unterteilt ist, wobei die erste Teilkammer mindestens eine sperrbare Einlaßöffnung für ein Trägermedium der anschwemmbaren Filterschicht, für das zu filtrierende Medium und für ein Spülmedium, sowie eine sperrbare Auslaßöffnung für das Spülmedium aufweist, und wobei die zweite Teilkammer eine sperrbare Auslaßöffnung für das gereinigte Filtrat aufweist.

In derartigen Filtriereinrichtungen (beispielsweise in den DE-B-1 005 493, 1 761 617 oder in den DE-A-1 944 438, 2 363 040 beschrieben), auch Anschwemmfilter genannt, wird auf ein Stützgewebe in der ersten Arbeitsphase ein in einem Trägermedium suspendiertes Filterhilfsmittel aufgebracht, das sich zu einer Filterschicht in der ersten Teilkammer ablagert, während das Trägermedium in die zweite Teilkammer gelangt und von dort wieder austritt. In der zweiten Arbeitsphase wird filtriert, indem der ersten Teilkammer das zu filtrierende, mit festen Teilchen verunreinigte Medium zugeführt wird, aus der es unter Durchdringung der Filterhilfsmittelschicht als reines Filtrat in die zweite Teilkammer gelangt und daraus ebenfalls wieder austritt. Die festen Teilchen setzen sich dabei an der Filterhilfsmittelschicht ab, die während dieser Arbeitsphase zunehmend verlegt wird. Als dritte Arbeitsphase folgt die Reinigung, bei der im allgemeinen durch Rückspülung die Filterschicht vom Stützgewebe abgehoben wird und durch ein Spülmedium zusammen mit den Verunreinigungen aus der ersten Teilkammer entfernt wird. Als Filtriereinrichtungen werden sehr oft sogenannte Kerzenfilter verwendet, in denen die Unterteilung der im wesentlichen zylindrischen Filterkammer durch achsparallele, einseitig abgeschlossene Filterkerzen erzielt wird, die in einem radial angeordneten Zwischenboden eingesetzt sind. Die Filterkerzen — zu Röhren geformte Stützgewebe — weisen einerseits zwar eine große Filterfläche auf, sind andererseits jedoch auf Grund ihrer Anordnung schwierig zu reinigen.

Eine weitere bekannte Filtereinrichtung dieser Art zeigt die DE-C-965 850. Bei ähnlichem Aufbau sind hier keine Filterkerzen in der Filterkammer vorgesehen, sondern ein etwa sternförmig ein zentrales Rohr umgebendes Stützgewebe, das die beiden Teilkammern voneinander trennt. Neben den eingangs beschriebenen Öffnungen in den beiden Teilkammern ist hier zusätzlich durch das zentrale Rohr eine weitere sperrbare Auslaßöffnung aus der zweiten Teilkammer vorgesehen, die zur Rückführung des Trägermediums während der Anschwemmphase dient.

Neben diesen Anschwemmfiltern, die eine selbsttätige Reinigung vornehmen sollen, sind Filterpressen in Verwendung, die weniger zur Reinigung eines zu filtrierenden Mediums, sondern vor allem zur Gewinnung des Filterkuchens dienen. Letztere sind daher keine Anschwemmfilter, da ein Filterhilfsmittel unerwünscht ist. Sie weisen mehrere neben- oder übereinander angeordnete Filterkammern auf, die mit Filtergeweben versehen sind, wobei zur Anpressung des Filterkuchens unter Druckeinwirkung bewegliche Wände, insbesondere Membranen, angeordnet sind. Derartige Filterpressen beschreiben etwa die AT-C-233 597, 256 866, 273 169, die DE-A-1 805 478, die CH-A-399 422 und 490 879 oder die US-A-3 098 429 und 3 270 887. Sämtliche dieser Filterpressen müssen zur Entnahme des Filterkuchens zerlegt werden, wobei die einzelnen Filterplatten zumindest soweit distanziert werden, daß der Filterkuchen parallel zum ebenen Filtergewebe senkrecht zur Längsachse entnommen werden kann. In einer Filterkammer können ein oder zwei Filtergewebe angeordnet sein, und für jedes Filtergewebe ist eine bewegliche Wand vorgesehen, die an das Filtergewebe heranpreßbar ist. Das Filtergewebe und seine bewegliche Wand können dabei an verschiedenen Filterrahmen vorgesehen sein. Bevorzugt ist jedoch nur ein Filterrahmen pro Filterkammer angeordnet, wobei das Filtergewebe unmittelbar an der beweglichen Wand befestigt ist, die zur Ableitung des Filtrates mit Rillen od. dgl. versehen ist.

Die DE-A-2 821 768 zeigt schließlich einen Anschwemmfilter mit einer im Querschnitt quadratischen Filterkammer, die durch eine Durchtrittsöffnungen aufweisende Trennwand, etwa einen Gitterrost, in zwei Teilkammern geteilt ist.

Das Stützgewebe ist auf der Trennwand befestigt, die vorzugsweise in zwei austauschbare Gittereinsätze mit je einem Stützgewebestück unterteilt ist. Die Trennwand dient als Auflage für das Stützgewebe, um die auf Grund des quadratischen Querschnittes während der Filtration ungleichmäßigen Dehnungsbeanspruchungen des Filtergewebes weitgehendst zu verringern. Weiters zeigt die DE-A-2 821 768 die Verwendung einer beweglichen Wand in jeder Teilkammer zur Veränderung des Volumens, wodurch einerseits der Filterkuchen ausgepreßt und andererseits zwischen je zwei Arbeitsphasen die Filtratkammer vollständig entleert werden kann, so daß auch die Vermischung von Restmengen verschiedener Medien ausgeschlossen wird.

Die Erfindung hat es sich nun zur Aufgabe gestellt, einen Anschwemmfilter der eingangs genannten Art mit einer im wesentlichen zylindrischen Filterkammer zu schaffen, der die Vorteile der vorstehend erwähnten Filtriereinrichtung nach der DE-A-2 821 768 aufweist, und gegebenenfalls auf die Anordnung einer eigenen mit Durchtrittsöffnungen versehenen Trennwand als Auflage für das Stützgewebe verzichtet werden kann.

Erfindungsgemäß wird dies dadurch erreicht, daß die Filterkammer durch das Stützgewebe in zwei rotationssymmetrische Teilkammern unterteilt ist, daß das Stützgewebe eben ausgebildet und entlang eines kreisringförmigen Randbereiches zwischen den Seitenwänden der beiden Teilkammern eingespannt ist, und daß jede Teilkammer parallel zum Stützgewebe durch eine bewegliche, durch äußere Druckeinwirkung an das Stützgewebe anpreßbare Wand begrenzt ist.

Die rotationssymmetrische Ausbildung der beiden Teilkammern und die Einspannung des kreisringförmigen Randbereiches des Stützgewebes führt zu nahezu gleichmäßigen Dehnungsbeanspruchungen des Stützgewebes bei der Filtration, da sich sowohl bei der Anschwemmung der Filterhilfsmittelschicht als auch bei der Anlagerung der aus dem zu filtrierenden Medium abzutrennenden Teilchen eine im wesentlichen gleichmäßige Druckverteilung auf die Filterfläche des Stützgewebes ergibt.

An Stellen, an denen eine erhöhte Teilchenablagerung erfolgen würde, sinkt die Durchflußgeschwindigkeit und damit der Teilchenzuwachs, der sich an Stellen mit verminderter Ablagerung wiederum erhöht.

In einer bevorzugten Ausführung ist vorgesehen, daß jede bewegliche Wand entlang eines kreisringförmigen Randbereiches zwischen der Seitenwand und der Bodenplatte der Teilkammer eingespannt ist. Dadurch werden auch im wesentlichen gleiche Dehnungsbeanspruchungen jeder beweglichen Wand erzielt.

Weist die Filtriereinrichtung einen durch eine innere Seitenwand gebildeten zentralen Kanal auf, so sind sowohl das Stützgewebe als auch beide beweglichen Wände mit je einer zentralen Öffnung versehen, wobei das Stützgewebe entlang eines kreisringförmigen inneren Randbereiches zwischen den den zentralen Kanal bildenden inneren Seitenwänden der beiden Teilkammern und jede bewegliche Wand entlang eines kreisringförmigen inneren Randbereiches zwischen der inneren Seitenwand und der Bodenplatte der Teilkammer eingespannt ist.

Die innere Seitenwand der ersten Teilkammer kann mit Durchbrechungen versehen sein, die die sperrbare Auslaßöffnung für das Spülmedium bilden, wobei der zentrale Kanal als Abflußleitung dient. Zur Erhöhung der Reißfestigkeit des Stützgewebes ist weiters bevorzugt vorgesehen, daß in jedem kreisringförmigen Randbereich des Stützgewebes zumindest ein Verstärkungsring angeordnet ist. Jeder Verstärkungsring kann gleichzeitig als Dichtungsring dienen und in eine Ringnut in der Stirnfläche der Seitenwand einer Teilkammer eingesetzt sein.

Nachstehend wird nun die Erfindung an Hand der Figuren der Zeichnungen in einem bevorzugten Ausführungsbeispiel näher beschrieben, ohne darauf beschränkt zu sein. Die

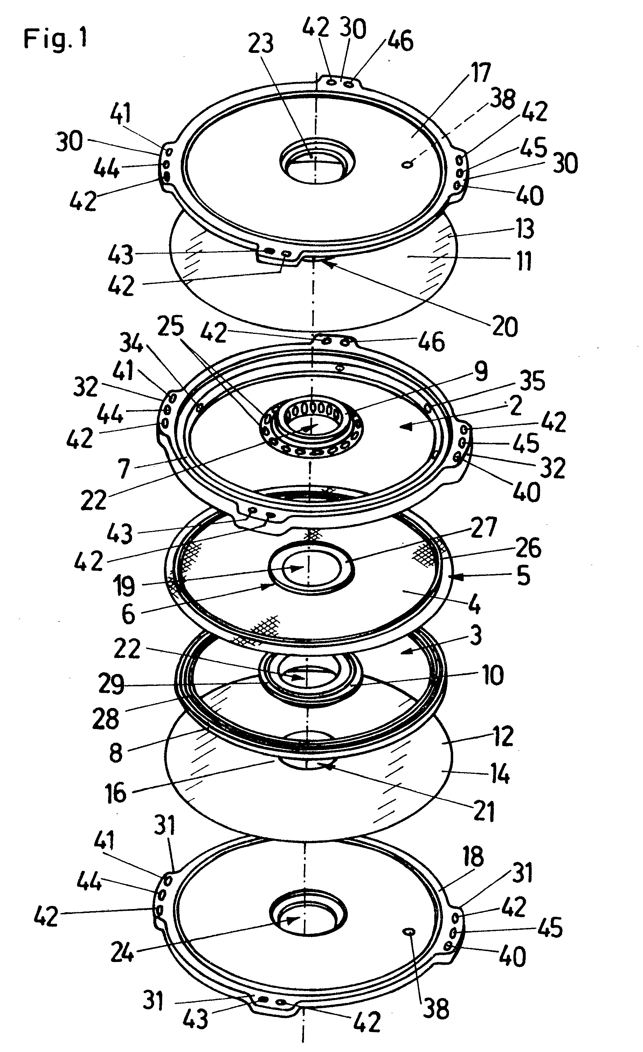

Fig. 1 zeigt eine Explosionszeichnung einer bevorzugten Ausführungsform der erfindungsgemäßen Filtriereinrichtung, die

Fig. 2 eine Draufsicht auf die geöffnete Filterkammer, die

Fig. 3 einen Axialschnitt nach der Linie III-III der Fig. 2 in der Darstellung nach Fig. 1, und die Fig. 4—6 Schnitte nach den Linien IV-IV, V-V und VI-VI der Fig. 2.

Die erfindungsgemäße Filtriereinrichtung weist eine rotationssymmetrische Filterkammer 1 auf, die durch ein ebenes Stützgewebe 4 in zwei rotationssymmetrische Teilkammern 2, 3 unterteilt ist. Jede Teilkammer 2, 3 ist seitlich durch eine Seitenwand 7, 8 nach außen und parallel zum Stützgewebe 4 durch eine bewegliche Wand 11, 12, vorzugsweise eine Membran, abgeschlossen. Die Seitenwände 7, 8 sind jeweils auf einer Bodenplatte 17, 18 angeordnet. Innere Seitenwände 9, 10 umgeben einen zentralen Kanal 22, der mit zentralen Öffnungen 23, 24 in den Bodenplatten 17, 18 fluchtet.

Das Stützgewebe 4 und die beweglichen Wände 11, 12 weisen ebenfalls zentrale Öffnungen 19, 20 und 21 auf. Im äußeren kreisringförmigen Randbereich 5 ist das Stützgewebe 4 verstärkt. Im Ausführungsbeispiel erfolgt dies durch einen gleichzeitig als Dichtungsring wirkenden Verstärkungsring 26, der in den Ringnuten 28 in den Stirnflächen der äußeren Seitenwände 7, 8 eingreift. Desgleichen ist auch der innere, die zentrale Öffnung 19 umgebende, kreisringförmige Randbereich des Stützgewebes 4 verstärkt. Ein hierzu vorteilhafter, ebenfalls gleichzeitig als Dichtungsring wirkender, Verstärkungsring 27 greift in Ringnuten 29 in den Stirnflächen der inneren Seitenwände 9, 10 ein.

Zur Verbindung der einzelnen Teile der Filtriereinrichtung sind vorgesehen: in der Oberfläche der Bodenplatte 18 eine äußere Ringnut 48 und eine die zentrale Öffnung 24 umgebende Ringschulter 51, in der äußeren Seitenwand 7 der ersten bzw. oberen Teilkammer 2 eine Ausnehmung 50, sowie an der Ober- und Unterfläche je ein Ringsteg 49, an der Unterfläche der inneren Seitenwand 10 ein Ringwulst 54, an der Oberfläche der inneren Seitenwand 9 ein Ringwulst 53, in der Unterfläche der Bodenplatte 17 eine äußere Ringnut 47 und eine die zentrale Öffnung 23 umgebende Ringschulter 52.

Da vorzugsweise mehrere Filterkammern übereinander gestapelt werden, sind die beiden Bodenplatten 17, 18 auch an den jeweiligen Außenseiten mit Ringnuten 47 bzw. 48 sowie mit Ringschultern 51 bzw. 52 versehen, so daß nur eine Bodenplatte jeweils zwischen zwei Filterkammern benötigt wird.

Beim Zusammenbau der einzelnen Teile wird auf die Bodenplatte 18 die untere bewegliche Wand 12 so aufgelegt, daß die zentralen Öffnungen 21 und 24 übereinstimmen. Die innere Seitenwand 10 der zweiten bzw. unteren Teilkammer 3 wird mit ihrem Ringwulst 54 in die Ringschulter 51 der Bodenplatte 18 aufgesetzt. Nachdem auch die äußere Seitenwand 8 der unteren Teilkammer 3 auf den kreisringförmigen Randbereich 14 der beweglichen Wand 12 aufgelegt worden ist, wird das Stützgewebe 4 darüber gelegt und die Verstärkungsringe 26, 27 in die Ringnuten 28, 29 der Seitenwände 8, 10 aufgesetzt, wobei der Ringsteg 49 an der Unterfläche in die Ringnut 48 der Bodenplatte 18 und der Verstärkungsring 26 in die Ringnut 28 eingreift, die in der die äußere Seitenwand 8 der zweiten Teilkammer 3 aufnehmenden Ausnehmung 50 der äußeren Seitenwand 7 vorgesehen ist. Als nächstes wird auf den Verstärkungsring 27 des Stützgewebes 4 die innere Seitenwand 9 der ersten Teilkammer 2 aufgeschoben, der in die Ringnut 29 zu liegen kommt. Die obere bewegliche Wand 11 kann nunmehr zwischen den Ringsteg 49 der äußeren Seitenwand 7 und den Ringwulst 53 der inneren Seitenwand 9 eingelegt und abschließend die Bodenplatte 17 aufgesetzt werden, in deren Ringnut 47 bzw. Ringschulter 52 der Ringsteg 49 und der Ringwulst 53 eingreift. Die so übereinandergesetzten Teile werden nunmehr durch nicht dargestellte Spannmittel zusammengedrückt, wodurch das Stützgewebe 4 zwischen den beiden äußeren und inneren Seitenwänden 7, 8 bzw. 8, 10, die bewegliche Wand 11 zwischen den Seitenwänden 7, 9 der ersten Teilkammer 2 und der Bodenplatte 17, und die bewegliche Wand 12 zwischen den Seitenwänden 8, 10 der zweiten Teilkammer 3 und der Bodenplatte 18 eingeklemmt werden.

Als Spannmittel können beispielsweise zwei Spanplatten, die durch eine durch den zentralen Kanal 22 geführte Spannschraube zusammengezogen sind, vorgesehen sein. Ebenso sind jedoch auch mehrere über den Umfang verteilte achsparallele Bohrungen denkbar, die von Spannschrauben durchsetzt werden.

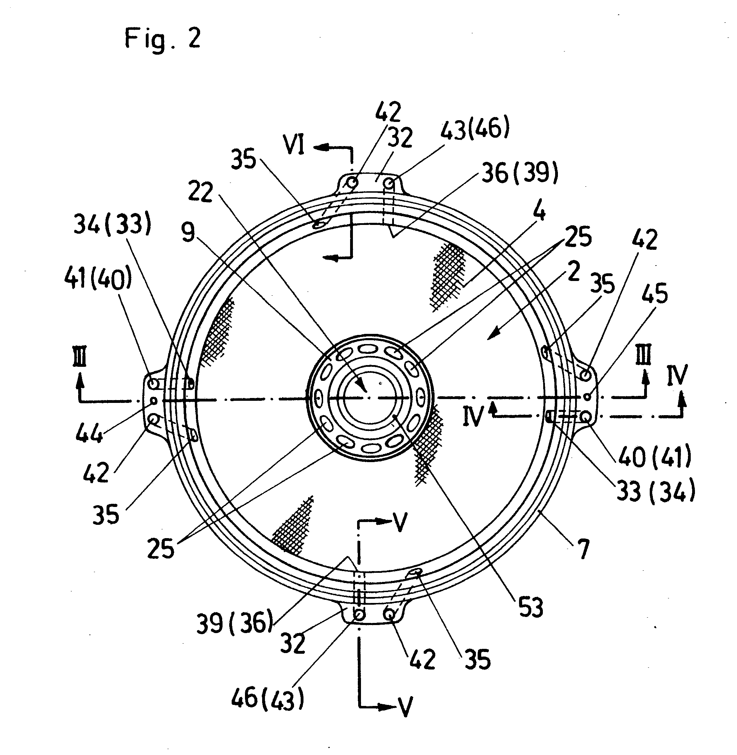

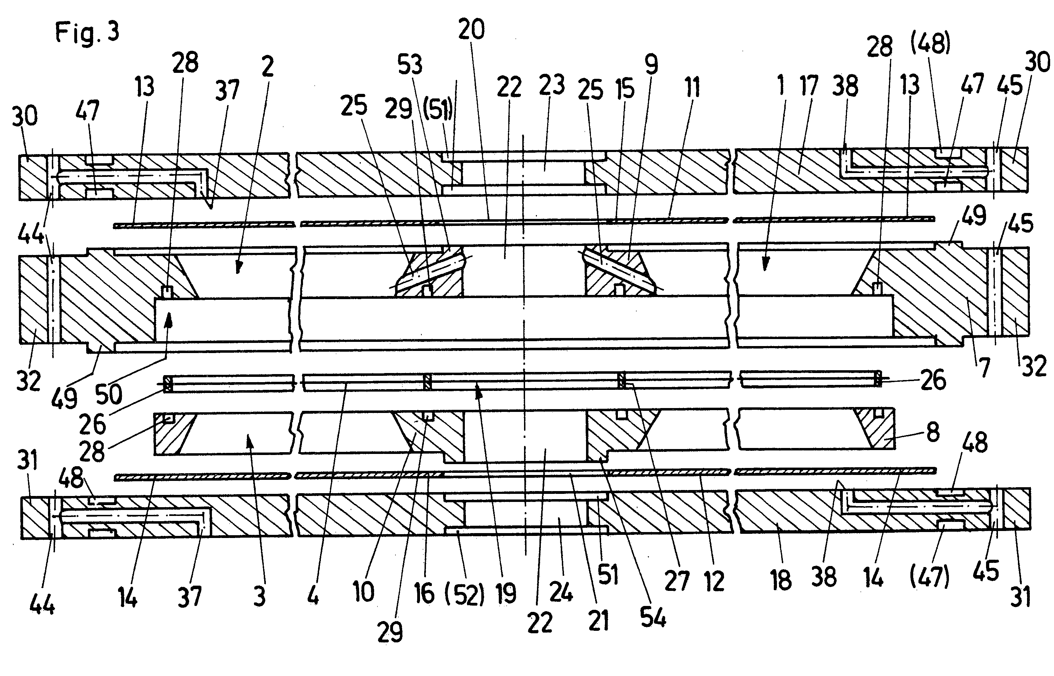

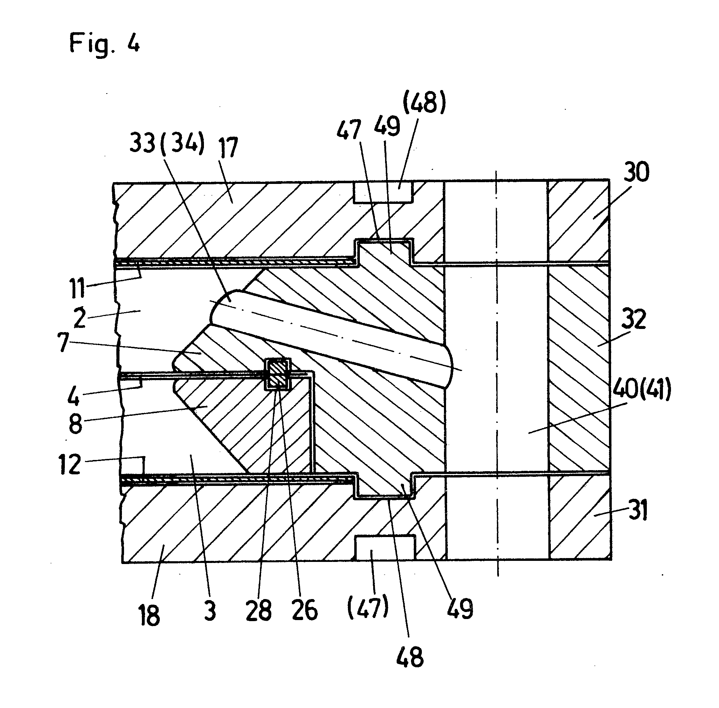

An den Bodenplatten 17, 18 sowie an der äußeren Seitenwand 7 sind nach außen vorstehend jeweils vier Ansätze 30, 31, 32 vorgesehen, durch die Zufluß- und Abflußleitungen geführt sind. Im dargestellten Ausführungsbeispiel sind, wie insbesondere aus Fig. 2 ersichtlich, in je zwei Ansätzen zwei Leitungen und den beiden anderen drei Leitungen vorgesehen. Vorzugsweise ist dabei folgende Aufteilung getroffen: In dem in Fig. 2 rechten Ansatz 32 ist als mittlere Leitung eine Zuflußleitung 45 für das der beweglichen Wand 12 zuzuführende Druckmedium, etwa Preßluft, vorgesehen. In Fig. 3 ist ersichtlich, daß eine Stichleitung von der Zuflußleitung 45 in die Bodenplatte 18 abzweigt, deren Einlaßöffnung 38 unterhalb der beweglichen Wand 12 angeordnet ist. Durch Einpressen des Druckmediums wird die bewegliche Wand 12 angehoben und gegen die Unterseite des Stützgewebes 4 gedrückt. Im rechten Ansatz der Fig. 2 ist weiters eine Zuflußleitung 40 für das Trägermedium des Filterhilfsmittels vorgesehen oder eine Zuflußleitung 41 für das zu filtrierende Medium vorgesehen. Wie aus Fig. 4 ersichtlich, zweigt von der Zuflußleitung 40, 41 eine Stichleitung schräg aufwärts ab, deren Einlaßöffnung 33 bzw. 34 in die erste Teilkammer 2 mündet. Jede Einlaßöffnung kann in den Zufluß aufspaltende Schlitze unterteilt sein. Durch den in der Fig. 2 rechten Ansatz 32 verläuft weiters noch die Zuflußleitung 42 für das Spülmedium, von der ebenfalls wieder eine Stichleitung abzweigt, deren Einlaßöffnung 35 ebenfalls in die erste Teilkammer 2 mündet.

Durch den in Fig. 2 unteren Ansatz 32 sind zwei Leitungen geführt. Einmal verläuft wiederum eine Zuflußleitung 42 für das Spülmedium hindurch, deren Stichleitung über die Einlaßöffnung 35 in die erste Teilkammer 2 mündet; zum anderen nimmt der Ansatz 32 auch die Abflußleitung 46 für das gereinigte Filtrat auf, das aus der zweiten Teilkammer 3 durch eine Auslaßöffnung 39 austritt und über eine Stichleitung in die Abflußleitung 46 gelangt.

Im in Fig. 2 linken Ansatz 32 sind wiederum drei Leitungen vorgesehen. Eine Zuflußleitung 44 für das Druckmedium zur Beaufschlagung der beweglichen Wand 11, das, wie aus Fig. 3 ersichtlich, über eine in der Bodenplatte 17 geführte Stichleitung durch die Einlaßöffnung 37 zwischen die Bodenplatte 17 und die bewegliche Wand 11 eindringen und diese abwärts an das Stützgewebe 4 annähern kann. Als zweite Leitung ist wiederum eine Zuflußleitung 42 für das Spülmedium vorgesehen, sowie eine Zuflußleitung 41 für das zu filtrierende Medium, die auch als Zuflußleitung 40 für das Trägermedium des Filterhilfsmittels dienen kann. Die beiden Zuflußleitungen 40, 41 können vertauschbar sein; es kann sich weiters eine der beiden Leitungen erübrigen, sofern als Trägermedium bereits gereinigtes Filtrat verwendet wird.

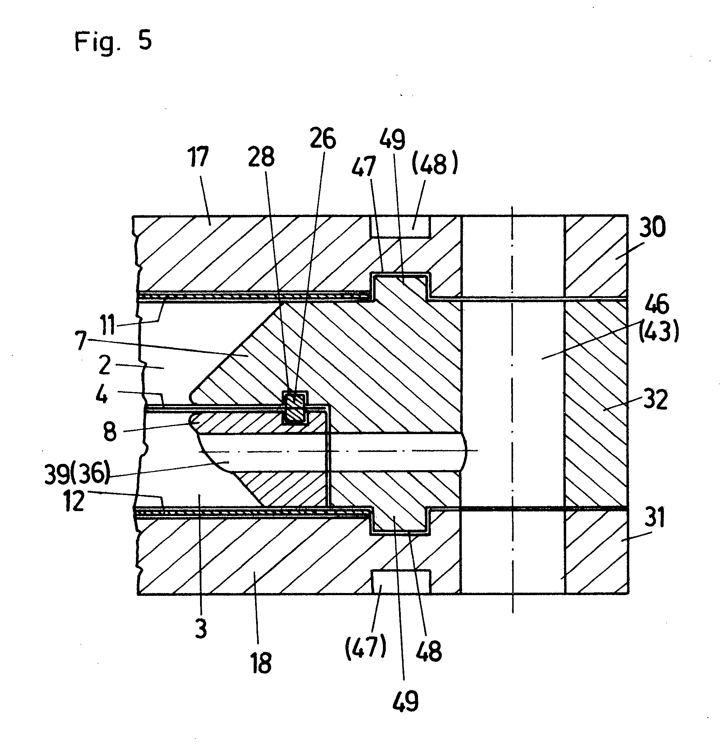

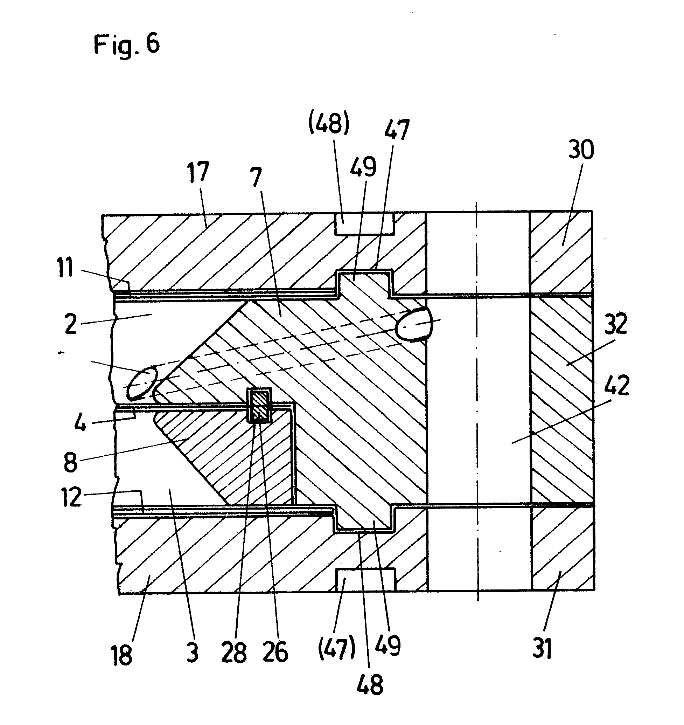

Schließlich sind durch den in Fig. 2 oberen Ansatz 32 weitere zwei Leitungen geführt. Die erste Leitung ist wiederum eine Zuflußleitung 42 für das Spülmedium, von der es über eine Stichleitung über die Auslaßöffnung 35 in die erste Teilkammer 2 mündet. In Fig. 6 ist der zugehörige Schnitt dargestellt, wobei auch alle bisherigen Zuflußleitungen 42 für das Spülmedium einschließlich der Stichleitungen in den übrigen Ansätzen 32 gleich ausgebildet sind. Die Stichleitung verläuft jeweils schräg von oben nach unten und die Auslaßöffnung 35 mündet knapp oberhalb des Stützgewebes 4 in die erste Filterkammer 2. Sie verläuft jedoch nicht, wie die Stichleitungen der Zuflußleitungen für alle anderen Medien in Richtung des zentralen Kanals 22, sondern möglichst tangential zur Filterfläche. Dies ist deshalb vorteilhaft, da das aus vier derartig ausgerichteten Stichleitungen eintretende Spülmedium die Oberfläche des Stützgewebes 4 etwa spiralig bestreicht, so daß eine gründliche Reinigung erfolgt. Das Spülmedium kann dann zusammen mit der verunreinigten Filterhilfsmittelschicht durch die Durchbrechungen 25 in den zentralen Kanal 22 abfließen. Als Spülmedium wird bevorzugt eine Kombination von Wasser und Luft verwendet, die jeweils diametral gegenüberliegend in die erste Teilkammer 2 eingebracht werden. Als weitere Leitung ist im oberen Ansatz 32 der Fig. 2 eine Zuflußleitung 43 für das Spülmedium vorgesehen, die durch ihre Stichleitung über die Einlaßöffnung 36 in die zweite Filterkammer 3 mündet. Die Anordnung und Ausbildung entspricht der in Fig. 5 gezeigten Ausführung für die Abflußleitung 46 des gereinigten Filtrates. Auch diese beiden Leitungen sind daher vertauschbar.

Sämtliche Einlaß- und Auslaßöffnungen bzw. Zufluß- und Abflußleitungen, einschließlich der Durchtrittsöffnungen 25 in den zentralen Kanal sind beispielsweise mittels Ventilen einzeln absperrbar, die jedoch, da sie nicht Teil der Erfindung sind, weggelassen wurden. Mehrere Filterkammern sind übereinander stapelbar, wobei einander die einzelnen Leitungen 40 bis 46 und die zentralen Kanäle 22 jeweils zur gemeinsamen Ver- und Entsorgung der Filterkammern ergänzen. Da sämtliche Filterkammern in diesem Fall durch ein gemeinsames Spannmittel verspannt werden, genügen zur Abdichtung der Leitungen zwischen allen Ansätzen 30, 31, 32 einfache Dichtungsringe, die nicht gezeigt sind.

Die beweglichen Wände 11, 12 können, da sie bevorzugt durch Membranen gebildet sind, beispielsweise durch im mittleren Ringteil eingesetzte Lochscheiben oder ähnlichem teilweise versteift sein. Sie können auch in ihren äußeren kreisringförmigen Randbereichen 13, 14 fest an der Bodenplatte 17, 18 fixiert sein.

Die erfindungsgemäße Filtriereinrichtung arbeitet wie folgt: Das Filterhilfsmittel, das in einem Trägermedium suspendiert ist, wird über die Zuflußleitung 40 (oder 41) in die erste Teilkammer 2 eingebracht. Das Filterhilfsmittel, vorzugsweise Zellulosefasern, bildet am Stützgewebe 4 die Filterschicht, während das Trägermedium in die zweite Teilkammer 3 fließt. Handelt es sich um reines Filtrat, wird es über die Abflußleitung 46 abgelassen; ist es ein unterschiedliches Medium, so kann es über die Leitung 43 ausfließen. Im letzteren Fall werden nach der Anschwemmung beide beweglichen Wände 11, 12 gegen das Stützgewebe 4 bewegt, so daß die Filterkammer vollständig entleert wird. Das zu filtrierende Medium fließt über die Zuflußleitung 46 aus der zweiten Teilkammer ab. Handelt es sich um wertvolles Medium, kann nach Abschluß der Filtration der Filterkuchen auf der Filterschicht durch die bewegliche Wand 11 ausgepreßt und anschließend in die zweite Teilkammer 3 durch die bewegliche Wand 12 ebenfalls entleert werden. Für den Reinigungsvorgang verbleibt die bewegliche Wand 12 am Stützgewebe 4 anliegend und das Spülmedium wird über die Zuflußleitungen 42 in die erste Teilkammer 2 zugeführt, aus der es über den zentralen Kanal 22 abfließt. Wird eine Rückspülung erwünscht, kann zusätzlich Spülmedium über die Zuflußleitung 43 in die zweite Teilkammer 3 eingebracht werden, das das Stützgewebe 4 rückspült und ebenfalls aus der ersten Teilkammer 2 in den zentralen Kanal 22 abfließt. Nach Abschluß der Reinigung werden wieder beide beweglichen Wände an das Stützgewebe 4 angepreßt und dadurch die Filterkammer 1 vollständig entleert, worauf wieder mit der Anschwemmung begonnen werden kann.

Der zentrale Kanal 22 kann auch entfallen, so daß die Filterfläche des Stützgewebes eine vollständige Kreisfläche ist. In diesem Fall können Abflußleitungen für das Spülmedium in einem oder mehreren der Ansätze 30, 31, 32 vorgesehen sein, deren Stichleitungen aus der ersten Teilkammer 2 ausgehen.

## Patentansprüche

1. Filtereinrichtung zur Abtrennung von Teilchen aus einem strömenden Medium, mit mindestens einer im wesentlichen zylindrischen Filterkammer, die durch ein Stützgewebe für eine anschwemmbare Filterschicht in zwei Teilkammern unterteilt ist, wobei die erste Teilkammer mindestens eine sperrbare Einlaßöffnung für ein Trägermedium der anschwemmbaren Filterschicht, für das zu filtrierende Medium und für ein Spülmedium, sowie eine sperrbare Auslaßöffnung für das Spülmedium aufweist, und wobei die zweite Teilkammer eine sperrbare Auslaßöffnung für das gereinigte Filtrat aufweist, dadurch gekennzeichnet, daß die Filterkammer (1) durch das Stützgewebe (4) in zwei rotationssymmetrische Teilkammern (2, 3) unterteilt ist, daß das Stützgewebe (4) eben ausgebildet und entlang eines kreisringförmigen Randbereiches (5) zwischen den Seitenwänden (7, 8) der beiden Teilkammern (2, 3) eingespannt ist, und daß jede Teilkammer (2, 3) parallel zum Stützgewebe (4) durch eine bewegliche, durch äußere Druckeinwirkung an das Stützgewebe (4) anpreßbare Wand (11, 12) begrenzt ist.

2. Filtriereinrichtung nach Anspruch 1, dadurch gekennzeichnet, daß jede bewegliche Wand (11, 12) entlang eines kreisringförmigen Randbereiches (13, 14) zwischen der Seitenwand (7 bzw. 8) und der Bodenplatte (17 bzw. 18) der Teilkammer (2 bzw. 3) eingespannt ist.

3. Filtriereinrichtung nach Anspruch 1 und 2, mit einem durch eine innere Seitenwand gebildeten zentralen Kanal in der Filterkammer, dadurch gekennzeichnet, daß das Stützgewebe (4) und beide beweglichen Wände (11, 12) je eine zentrale Öffnung (19, 20, 21) aufweisen, wobei das Stützgewebe (4) entlang eines kreisringförmigen inneren Randbereiches (6) zwischen den den zentralen Kanal (22) bildenden inneren Seitenwänden (9, 10) der beiden Teilkammern (2, 3) und jede bewegliche Wand (11 bzw. 12) entlang eines kreisringförmigen inneren Randbereiches (15 bzw. 16) zwischen der inneren Seitenwand 9 bzw. 10) und der Bodenplatte (17 bzw. 18) der Teilkammer (2 bzw. 3) eingespannt ist.

4. Filtriereinrichtung nach Anspruch 3, dadurch gekennzeichnet, daß die innere Seitenwand (9) der ersten Teilkammer (2) Durchbrechungen (25) aufweist, die die sperrbare Auslaßöffnung für das Spülmedium bilden.

5. Filtriereinrichtung nach Anspruch 1 oder 3, dadurch gekennzeichnet, daß in jedem kreisringförmigen Randbereich (5, 6) des Stützgewebes (4) zumindest ein Verstärkungsring (26, 27) angeordnet ist, der in eine Ringnut (28, 29) in der Stirnfläche der Seitenwand (7, 9 bzw. 8, 10) einer Teilkammer (2 bzw. 3) eingesetzt ist.

## Claims

1. A filtering apparatus for the filtering of particles from a flowing medium comprising at least one substantially cylindrical filter chamber divided into two compartments by a support fabric for a precoat filter layer, the first compartment having at least one closable inlet opening for a carrier medium of the precoat filter layer, for the medium to be filtered and for a washing medium, as well as a closable outlet opening for the washing medium, the second compartment having a closable outlet opening for the purified filtrate, characterized in that the filter chamber (1) is divided into two axially symmetric compartments (2, 3) by means of the support fabric (4), that the support fabric (4) is planar and clamped along a ring-shaped rim region (5) between the side walls (7, 8) of the two compartments (2, 3), and that each compartment (2, 3) is delimited parallel to the support fabric (4) by a movable wall (11, 12) adapted to be pressed against the support fabric (4) by means of external pressure.

2. A filtering apparatus according to claim 1, characterized in that each movable wall (11, 12) is clamped along a ring-shaped rim region (13, 14) between the side wall (7 and 8, respectively) and the bottom plate (17 and 18, respectively) of the compartment (2 and 3, respectively).

3. A filtering apparatus according to claim 1 and 2, comprising a central channel in the filter chamber, said channel being formed by an internal side wall, characterized in that the support fabric (4) and the two movable walls (11, 12), each, have a central opening (19, 20, 21) the support fabric (4) being clamped along a ring-shaped internal rim region (6) between the internal side walls (9, 10) of the two compartments (2, 3) forming the central channel (22), and each movable wall (11 and 12, respectively) being clamped along a ring-shaped internal rim region (15 and 16, respectively) between the internal side wall (9 and 10, respectively) and the bottom plate (17 and 18, respectively) of the compartment (2 and 3, respectively).

4. A filtering apparatus according to claim 3, characterized in that internal side wall (9) of the first compartment (2) has openings (25) forming the closable outlet opening for the washing medium.

5. A filtering apparatus according to claims 1 or 3, characterized in that at least one reinforcing ring (26, 27) which is inserted in an annular groove (28, 29) in the adjacent face of the side wall (7, 9 and 8, 10 respectively) of a compartment (2 and 3, respectively), is arranged in each ring-shaped rim region (5, 6) of the support fabric (4).

## Revendications

1. Installation de filtration pour séparer des particules d'un fluide en écoulement, comportant au moins une chambre de filtration sensiblement cylindrique qui est subdivisée en deux chambres partielles par un tissu de support d'une chouche filtrante apte à flotter, la première chambre partielle présentant au moins un orifice obturable pour l'admission d'un fluide de sustentation de la couche filtrante apte à flotter, pour le fluide devant être filtré et pour un agent de rinçage, ainsi qu'un orifice obturable de sortie de cet agent de rinçage, la seconde chambre partielle comportant un orifice obturable de sortie du filtrat épuré, caractérisée par le fait que la chambre de filtration (1) est subdivisée par le tissu de support (4) en deux chambres partielles (2, 3) à symétrie de révolution; par le fait que le tissu de support (4) est de réalisation plane et est coincé, le long d'une zone marginale annulaire (5), entre le parois latérales (7, 8) des deux chambres partielles (2, 3); et par le fait que chaque chambre partielle (2, 3) est délimitée, parallèlement au tissu de support (4), par une paroi mobile (11, 12) pouvant être pressée contre ce tissu de support (4) sous l'action d'une pression extérieure.

2. Installation de filtration selon la revendication 1, caractérisé par le fait que chaque paroi mobile (11, 12) est coincée le long d'une zone marginale annulaire (13, 14) entre le paroi latérale (7,8, respectivement) et la plaque de fond (17, 18, respectivement) de la chambre partielle (2, 3, respectivement).

3. Installation de filtration selon les revendications 1 et 2, présentant dans la chambre de filtration un canal central formé par une paroi latérale interne, caractérisé par le fait que le tissu de support (4) et les deux parois mobiles (11, 12) sont percés chacun d'un orifice central (19, 20, 21), le tissu de support (4) étant coincé le long d'une zone marginale annulaire interne (6) entre les parois latérales internes (9, 10) des deux chambres partielles (2, 3) formant le canal central (22), et chaque paroi mobile (11, 12, respectivement) étant coincée le long d'une zone marginale annulaire interne (15, 16, respectivement) entre la paroi latérale interne (9, 10, respectivement) et la plaque de fond (17, 18, respectivement) de la chambre partielle (2, 3).

4. Installation de filtration selon la revendication 3, caractérisée par le fait que la paroi latérale interne (9) de la première chambre partielle (2) est percée d'évidements (25) qui forment l'orifice obturable de sortie de l'agent de rinçage.

5. Installation de filtration selon la revendication 1 ou 3, caractérisée par le fait que, dans chaque zone marginale annulaire (5, 6) du tissu de support (4), se trouve au moins une bague de renforcement (26, 27) qui est insérée dans une gorge annulaire (28, 29) dans la face extrême de la paroi latérale (7, 9; 8, 10, respectivement) d'une chambre partielle (2, 3, respectivement).

0 038 042

Fig. 1

7

Fig. 2

Fig. 3

0 038 042

Fig. 4

0 038 042

Fig. 5

15

Fig. 6